# EUROPÄISCHE PATENTSCHRIFT

(11) **EP 1 134 446 B1**
(45) Veröffentlichungstag und Bekanntmachung des Hinweises auf die Patenterteilung: **04.06.2003**
(21) Anmeldenummer: 01105126.5
(22) Anmeldetag: 02.03.2001
(51) Int. Cl.: F16D 3/74, F16D 3/76

(54) **Elastische Wellenkupplung**
Elastic shaft coupling
Accouplement d'arbre élastique

(30) Priorität: 17.03.2000 DE 10013412
(43) Veröffentlichungstag der Anmeldung: 19.09.2001
(73) Patentinhaber: Centa-Antriebe Kirschey GmbH, 42781 Haan (DE)
(72) Erfinder: Kirschey, Gerhard, Dipl.-Ing., 42329 Wuppertal (DE)
(74) Vertreter: Patentanwälte Ostriga & Sonnet

(56) Entgegenhaltungen:
- WO-A-96/35886
- GB-A- 1 121 009
- GB-A- 2 078 907
- US-A- 3 039 281
- US-A- 4 389 204

## Beschreibung

Die Erfindung bezieht sich auf eine elastische Wellenkupplung nach dem Obergriff des Patentanspruchs 1.

Wellenkupplungen dieser Art sind in zahlreichen Ausführungsformen bekannt. Als Bestandteil von Antriebssträngen haben sie die Aufgabe, Drehmomente und Leistungen von einem Antriebsaggregät wie Dieselmotor od.dgl. auf ein Abtriebsaggregat, z.B. einen Generator, zu übertragen. Dabei fällt der Kupplung neben der Kraftübertragung die Aufgabe zu, vom Antriebsaggregat herrührende Drehmomentspitzen auszugleichen, um einen gleichmäßigen Lauf des angetriebenen Aggregats zu erzielen.

Insbesondere für Schiffsantriebe, auf deren Anwendung sich allerdings die der Erfindung zugrundeliegende Kupplung keineswegs beschränkt, werden hohe Leistungen gefordert. Diese wiederum erfordem in der Regel sehr aufwendig gebaute Kupplungen.

Das Dokument WO 96/35886 zeigt und beschreibt in seiner Fig. 3 eine elastische Wellenkupplung mit wenigstens zwei koaxial angeordneten, einstückigen sowie im wesentlichen V-förmigen elastischen Kupplungskörpem; deren jeder mit seiner etwa in Axialrichtung nach außen weisenden Ringfläche mit einem Anschlussflansch und mit seiner nach innen weisenden Ringfläche mit einem metallischen inneren Ringkörper jeweils durch Vulkanisation verbunden ist, wobei die äußeren Anschlussflansche von planen, ringförmigen Blechen gebildet sind und die inneren Ringkörper drehfest zu einem kegelförmigen Körper miteinander verbunden sind.

Ähnliche Kupplungen zeigen auch die Dokumente US-A-3 039 281, GB-A-1 121 009 und US-A-4 389 204.

WO 96/35886 zeigt alternativ (s. Fig. 7) auch einen einstückigen, im wesentlichen V-förmigen inneren Ringkörper, wobei hier allerdings die äußeren Anschlussflansche relativ aufwendig von profilierten Formteilen gebildet sind.

Mit bestimmend für eine hohe und lang anhaltende Leistungsfähigkeit einer Wellenkupplung ist eine gute thermische Konditionierung der elastischen Kupplungselemente. Es ist daher wichtig, die elastischen Kupplungselemente im Betrieb einer Kupplung zu kühlen. Das Dokument WO 96/35886, von der die vorliegende Erfindung ausgeht, sieht jedoch eine Kühlung von Kupplungsteilen nicht vor.

Aufgabe der Erfindung ist es daher, eine Kupplungsbauform in. Vorschlag zu bringen, die hohe Leistungen zu übertragen im Stande ist und sich dennoch wirtschaftlich und kostengünstig herstellen lässt.

Die Erfindung löst diese Aufgabe mit den Merkmalen des Anspruchs 1 und ist dem entsprechend dadurch gekennzeichnet dass die inneren Ringkörper einen einstückigen, im Längsschnitt im wesentlichen V-förmigen Gusskörper ausbilden und dass im Gusskörper ein von innen nach außen durchgehender Belüftungskanal vorgesehen ist.

Durch Ausgestaltung der inneren Ringkörper zu einem einstückigen Gusskörper ist eine besonders einfach bauende und auch robuste Kupplung geschaffen.

Der Gusskörper kann vorzugsweise aus Aluminiumguss bestehen oder ein Gusskörper aus einer Leichtmetalllegierung gefertigt sein. Aluminium ist ein spezifisch leichter Werkstoff und zeichnet sich auch besonders durch eine gute Wärmeleitfähigkeit aus, woraus eine besondere Eignung des Gusskörpers resultiert, mittels des in ihm vorgesehenen. von innen nach außen durchgehenden Belüftungskanals zur Kühlung der Kupplung beizutragen. Selbstverständlich sind aber auch andere metallische Werkstoffe geeignet, sofem diese eine gute Wärmeleitfähigkeit aufweisen.

Insbesondere für geringere Leistungsanforderungen können sowohl die Kupplungskörper als auch der Gusskörper jeweils einstückig-kreisringförmig ausgeführt sein. Gleichwohl ist es möglich und für größere Kupplungen zur Übertragung höherer Leistungen sinnvoll, sowohl den Gusskörper als auch die gummielastischen Kupplungskörper bekanntermaßen in Segmenten anzuordnen. Eine segmentierte Kupplung könnte z.B. vier über den Kupplungsumfang verteilte Segmente aufweisen. Jedes Segment würde dann jeweils zwei einstückige elastische Kupplungskörper-Segmente und ein Gusskörper-Segment umfassen.

Gemäß einer bevorzugten Ausführungsform verläuft die Quermittelebene des Gusskörpers lotrecht zur Längsachse der Kupplurig, und die Ringscheiben sind zumindest über ihre wesentlich radiale Erstreckung hinweg unter einem Winkel geneigt zur der Längsachse angeordnet, derart, dass die Ringscheiben im Längsschnitt der Kupplung betrachtet - einen sich zur Längsachse der Kupplung hin öffnenden Winkel ausbilden. Eine optimale Beanspruchung der elastischen Körper insbesondere im Hinblick auf eine über den gesamten Querschnitt hinweg gleichförmige Schubspannungsverteilung ergibt sich. wenn die Schenkel des Winkels die Längsachse der Kupplung jeweils etwa in den Ebenen der zugehörigen Anschlussflansche schneiden.

Im zentralen Gusskörper kann im Scheitelbereich des Winkels wenigstens eine Luftaustrittsöffnung zwischen den Ringscheiben vorhanden sein. Aufgrund des V-förmigen Verlaufs der Ringscheiben, im Längsschnitt der Kupplung betrachtet, ergibt sich innen wenigstens eine Lufteintrittsöffnung, so dass Umgebungsluft, von den Fliehkräften während des Betriebs der Kupplung gefördert, von innen nach außen durch den inneren Hohlraum des Gusskörpers hindurchstreichen und die Kupplung kühlen kann. Zur Erhöhung der Stabilität der Kupplung sind die Ringscheiben vorzugsweise über Versteifungsrippen. mitein-. ander verbunden.

Die durch den (uftdurchströmten Gusskörper geschaffene innere Ventilation hat insbesondere gegenüber herkömmlichen Lösungen zur Kühlung, die darin bestehen, die elastischen Kupplungskörper mit Lüftungsdurchbrüchen und -bohrungen geradezu zu durchlöchern, erhebliche Vorteile Dadurch, dass erfindungsgemäß allein der Gusskörper zur Belüftung herangezogen wir, werden die elastischen Kupplungskörper jedoch in keinerlei Weise geschwächt. Da diese keine Durchbrüche aufweisen, können also in den Kupplungskörpem auch keine gefährlichen Spannungsspitzen entstehen.

Im Falle einer segmentierten Kupplung ist ein Stützring vorgesehen, mit dem der Gusskörper mittels Schrauben verspannbar ist, die von der Außenseite des Gusskörpers her in radialer Richtung in den Stützring einschraubbar sind. Dieser Stützring und die Verschraubung jedes Gusskörpers mit ihm sichert die Gusskörpersegmente gegen Fliehkräfte und verhindert ein Kippen der Segmente.

In weiterer Ausgestaltung der Erfindung ist vorgesehen, dass der Stützring schmaler ist als der Abstand zwischen den Ringscheiben des Gusskörpers im Anordnungsbereich des Stützrings. So können zwischen dem Stützring und den inneren Ringkörpem Lufteintrittsöffnungen vorgesehen sein, durch die Kühlluft in den inneren Hohlraum des Gusskörpers eintreten kann.

Die Versteifungsrippen weisen vorzugsweise in ihren inneren, zur Längsachse der Kupplung weisenden Stirnseiten jeweils eine Nut zur formschlüssigen Aufnahme des Stützrings auf, wodurch auf einfache Weise eine sichere und feste Verbindung gewährleistet ist.

Im Falle einer Kupplung mit parallel geschalteten Kupplungskörpem kann der Stützring Bestandteil einer Nabe sein, die mit einem der Anschlussflansche drehfest verbunden ist.

Schließlich kann die Anordnung noch so getroffen sein, dass die Ringscheiben radial innere Abschnitte aufweisen, die im wesentlichen senkrecht zur Längsachse der Kupplung ausgerichtet sind. In diesem inneren Ringbereich ergibt sich dadurch eine erhöhte Belastbarkeit der elastischen Kupplungskörper.

Sofern, was in der Regel der Fall sein wird, die Kupplung zum Anschluss an die Schwungscheibe eines Antriebsaggregats wie Dieselmotor od.dgl. bestimmt ist, sieht die Erfindung unter dem Aspekt der Kühlung der Kupplungselemente des weiteren vor, dass zwischen Schwungscheibe und zugehörigem Anschlussflansch wenigstens ein Distanzkörper angeordnet ist, der mindestens einen Belüftungsspalt zwischen Schwungscheibe und Anschlussflansch ausbildet. Damit wird erreicht, dass der zur Befestigung an der Schwungscheibe bestimmte Anschlussflansch der elastischen Wellenkupplung hinterlüftet wird. Der Lüftungsspalt zwischen Schwungscheibe und Anschlussflansch entkoppelt die elastische Wellenkupplung thermisch von der Schwungscheibe des wärmespendenden Antriebsaggregats. Umgebungsluft ist in der Lage, aufgrund der im Betrieb der Kupplung herrschenden Fliehkräfte von innen nach außen durch den Belüftungsspalt zu strömen und hier entstehende Wärme nach außen abzuführen.

Weitere Merkmale der Erfindung sind in den bislang nicht zitierten Unteransprüchen angegeben. Im übrigen versteht sich die Erfindung am besten anhand der nachfolgenden Beschreibung von in den Zeichnungen dargestellten Ausführungsbeispielen. In den Zeichnungen zeigen:
- Fig. 1: einen Halb-Längsschnitt durch eine elastische Wellenkupplung mit in Serie geschalteten Kupplungskörpern,
- Fig. 2: eine Stimansicht auf einen Quadranten der Kupplung entsprechend dem Ansichtspfeil II in Fig. 1,
- Fig. 3: einen Halblängsschnitt der Kupplung nach Fig. 1, jedoch in einer umfangsversetzten Ebene geschnitten, sowie mit einer Distanzscheibe zur Kühlung der Kupplung im Befestigungsbereich an einer Schwungscheibe,
- Fig. 4: einen Quadranten der Kupplung in Stimansicht entsprechend dem Ansichtspfeil IV in Fig. 3 und
- Fig. 5: einen Halblängsschnitt durch eine elastische Wellenkupplung mit parallel geschalteten gummielastischen Kupplungskörpem.

In den Figuren ist eine elastische Wellenkupplung insgesamt mit 10 bezeichnet. Sie umfasst elastische Kupplungskörper 11 mit jeweils im wesentlichen V-förmigen Querschnitt, der sich in Radialrichtung von der Kupplungs-Längsachse L nach außen hin im wesentlichen stetig vergrößert.

Die nach außen weisenden Stirnflächen 11a der elastischen Kupplungskörper 11 sind jeweils mit einem Anschlussflansch 12 und 13 durch Vulkanisation fest verbunden. Die nach innen weisenden Stirnflächen 11b der Kupplungselemente 11 sind, ebenfalls durch Vulkanisation, an einen mit 29 bezeichneten Gusskörper angeheftet, der aus einem Metall oder einer Metalllegierung mit guten Wärmeleiteigenschaften besteht, z.B. aus Aluminium.

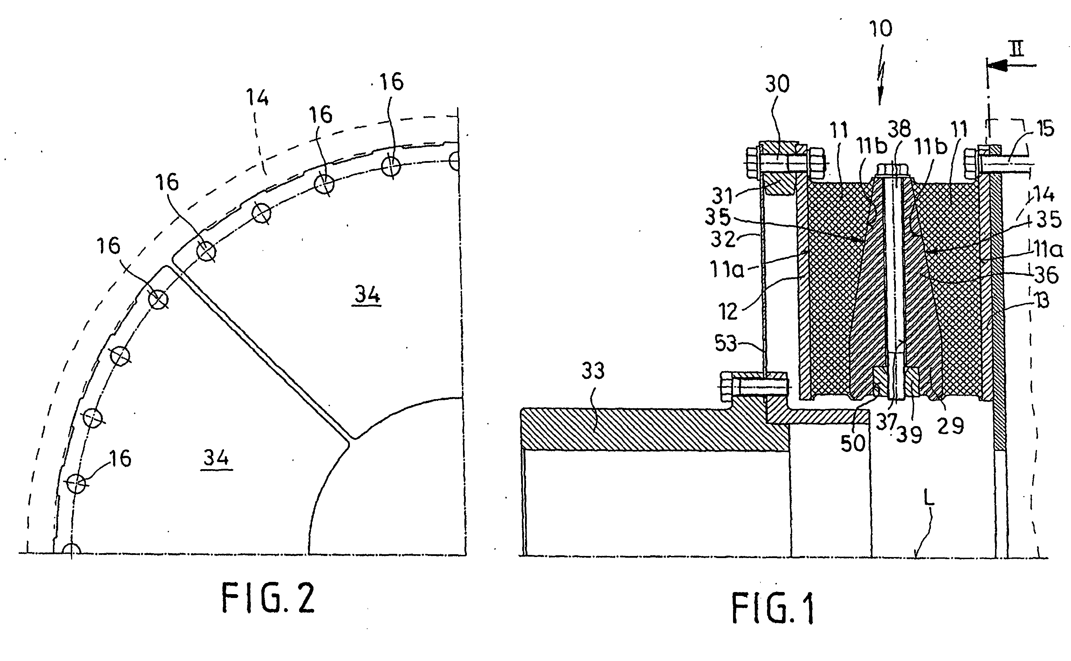

Bei dem Ausführungsbeispiel nach den Fig. 1 bis 3 dient der eine Anschlussflansch 13 zur Befestigung der Kupplung 10 an einer nicht näher dargestellten Schwungscheibe 14 mittels Schrauben 15, die am äußeren Rand des Anschlussflansches 13 befindliche Bohrungen 16 durchgreifen. Der andere Anschlussflansch 12 weist außenseitig eine Verschraubung 30 mit Distanzring 31 auf zum Anschluss einer Membran 32 auf, über die die Kupplung 10 abtriebsseitig mit einer Nabe 33 verbunden ist. Die nicht grundsätzlich erforderliche Membran hat den Vorteil, die Kupplung axial weicher zu gestalten und u.a. auch Achsfluchtfehler im Antriebsstrang auszugleichen.

Bei Wellenkupplungen für kleinere Leistung können sowohl die elastischen Kupplungskörper 11 als auch die Anschlussflansche 12 und 13 sowie der Gusskörper 29 jeweils als einstückige Ringkörper ausgeführt sein. Für Kupplungen höherer Leistungsklassen empfiehlt sich aus praktischen Erwägungen hinsichtlich Herstellbarkeit und Montage die Segmentierung der Kupplung, d.h. also die Ausführung der genannten Bauteile in Segmenten. Üblicherweise werden vier über den Umfang der Kupplung verteilte Segmente 34 vorgesehen, von denen Fig. 2 jeweils zwei Segmente 34 zur Hälfte zeigt.

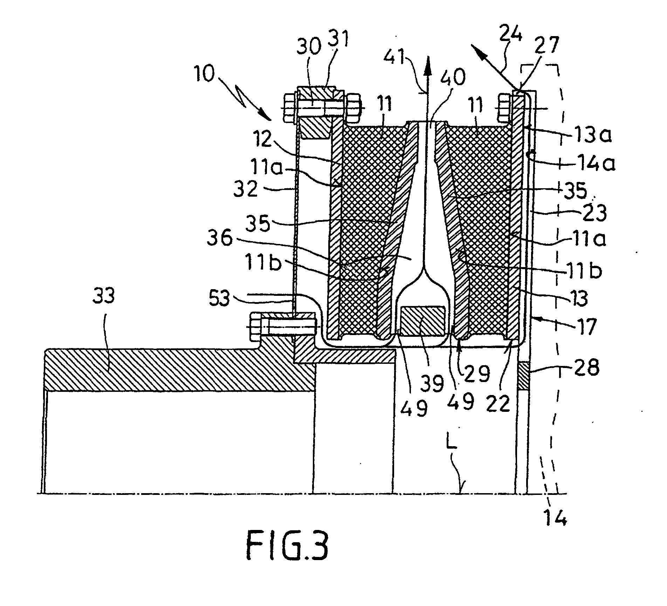

Die Schnittführung der Fig. 3 veranschaulicht, dass der Gusskörper 29 im Prinzip aus zwei konischen bzw. konisch verlaufenden Ringscheiben 35 besteht. Im Innern des Gusskörpers 29 sind Versteifungsrippen 36 vorgesehen. Diese haben auch in Umfangsrichtung eine gewisse Erstreckung und sind - alle oder einige - mit Radialbohrungen 37 versehen. Dies zeigt Fig. 1, die des weiteren erkennen lässt, dass die Radialbohrung 37 zur Aufnahme einer Schraube 38 dient, mit der Gusskörper 29 und ein Stützring 39 miteinander verschraubt werden. Der Stützring 39 ist einteilig und umlaufend und dient dazu, den Gusskörper 29 und damit die Kupplung 10 gegen Fliehkräfte zu sichern, und ein Kippen der einzelnen Segmente 34 zu vermeiden.

Wie Fig. 3 zeigt, ist im Bereich zwischen den Versteifungsrippen 36 ein von innen nach außen durchgehender Belüftungskanal 40 im Gusskörper 29 vorgesehen, der es der Umgebungsluft gestattet, entsprechend der Pfeilrichtung 41 die Kupplung 10 innen zu belüften, d.h. zentral durch den Gusskörper 29 zu streichen. Lufteintrittsöffnungen für die Kühlluft sind bei den dargestellten Ausführungsbeispielen in der Membran 32 vorgesehen. Damit gelingt es auf einfache Weise, eine relativ wärmste Zone der Kupplung 10 durch ständigen Luftaustausch zu kühlen.

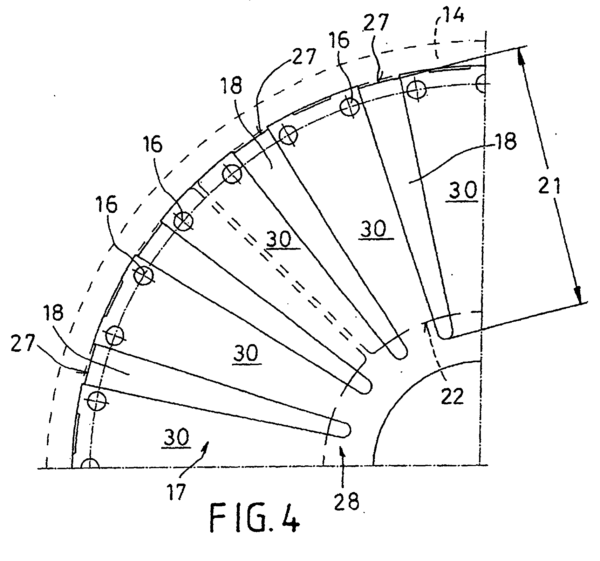

Fig. 3 zeigt in Verbindung mit Fig. 4 eine zusätzliche Kühlungsmaßnahme im Anschlussbereich zu einer Schwungscheibe 14.

Die Montage der elastischen Kupplung 10 über den Anschlussflansch 13 an der Schwungscheibe 14 erfolgt unter Zwischenlage eines Distanzkörpers 17, der beim Ausführungsbeispiel als ringscheibenförmiges Distanzblech 28 ausgebildet ist. Dieses Distanzblech 28 ist, wie Fig. 4 dies am besten zeigt, eine Ringscheibe mit radialen Einschnitten 18. Diese radialen Einschnitte 18 erstrecken sich von außen nach innen über einen wesentlichen Teil der radialen Gesamterstreckung des Blechs 28 hinweg. So bleibt innen ein ununterbrochen durchlaufender Ringabschnitt bestehen. Die Materialstärke des Distanzblechs 28 kann in der Praxis etwa der Wanddicke des Anschlussflansches 13 entsprechen.

Im konkreten Ausführungsbeispiel ist die Tiefe 21 der radialen Einschnitte 18 so bemessen, dass sie nach innen über den Innenumfangsrand 22 des Anschlussflansches 13 hinaus reicht. Insgesamt läßt sich das Distanzblech 28 in der Stirnansicht entsprechend Fig. 4 als sternförmiges Gebilde betrachten, dessen Strahlen von Armen 30 gebildet sind. In Fig. 4 weist das Distanzblech 28 sechzehn über den Kupplungsumfang verteilt angeordnete Arme 30 auf. Diese Anzahl ist selbstverständlich nicht bindend, sondern nur als Beispiel zu verstehen.

In Fig. 3 bildet das Distanzblech 28 zwischen der zum Schwungrad 14 weisenden Außenfläche 13a des Anschlussflansches 13 und der zum Anschlussflansch 13 weisenden Fläche 14a der Schwungscheibe 14 einen Belüftungsspalt 23 aus, durch den die mit dem Pfeil 24 angedeutete Kühlluftströmung hindurch streichen kann.

Da der Anschlussflansch 13 teilweise in einer Einsenkung (bei 14a) der Schwungscheibe 14 liegt, sind besondere Luftaustrittsöffnungen geschaffen. Diese bestehen aus Randaussparungen 27 am Außenumfang des Anschlussflansches 13.

Aufgrund der Zwischenlage eines sehr einfach gestalteten Distanzblechs 18 zwischen Anschlussflansch 13 der Kupplung 10 und der Schwungscheibe 14 ist hier eine wirksame Durchlüftung des Spaltes 23 geschaffen. Dies trägt in erheblichem Maße zur Schonung der hitzeempfindlichen elastischen Gummikörper 11 der Kupplung 10 bei und verleiht dieser mit konstruktiv einfachen Maßnahmen eine deutlich erhöhte Lebensdauer.

Praktische Versuche haben in überraschendem Ausmaß die Wirksamkeit der Kühlung bestätigt. Eine Kupplung wurde, bei jeweils gleicher induzierter Verlustleistung durch Querversatz und auch sonst gleichen Betriebsbedingungen zum einen ohne und zum anderen mit Distanzblech betrieben. Ohne Einsatz des kühlenden Distanzblechs wurden im Kem der elastischen Kupplungskörper im Mittel Temperaturen von 90°C gemessen. Bei Verwendung eines entsprechend der Erfindung ausgebildeten und angeordneten Kühlblechs reduzierte sich diese Temperatur auf ca. 74°C.

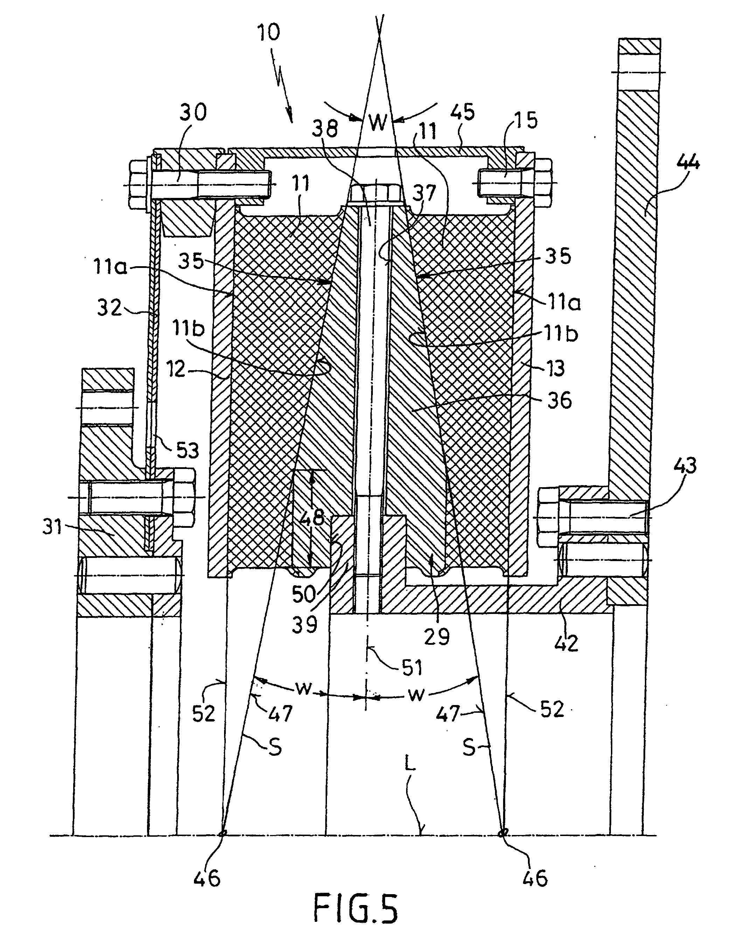

Während die Fig. 1 und 3 im Längsschnitt eine Kupplung 10 zeigen, deren elastische Kupplungskörper 11 im Kraftfluss hintereinander geschaltet sind, wodurch gegenüber einer einfachen Anordnung von Kupplungskörpern eine doppelte Drehelastizität bei halber Steifigkeit erzielt wird, zeigt Fig. 5 einen Längsschnitt durch eine Kupplung mit parallel geschalteten Kupplungselementen 11. Eine solche Kupplung weist gegenüber einer einfachen elastischen Kupplung doppelte Steifigkeit auf und kann ein doppelt so großes Drehmoment übertragen.

Bei dieser Ausführungsform ist der Stützring 39 mit einer Nabe 42 verbunden und - wie dargestellt - einstückig mit ihr ausgeführt, und die Nabe 42 wird über eine Verschraubung 43 mit einem Flansch 44 zur Befestigung der Kupplung 10 an einem Antriebsaggregat verbunden. Mit 45 ist ein Ringkörper bezeichnet, der außen an die Verschraubungen 15 und 30 angeschlossen und die Aufgabe hat, die Anschlussflansche 12 und 13 zum Zwecke der Leistungsübertragung fest miteinander zu verbinden.

Anhand von Fig. 5 soll nachfolgend noch die Geometrie der Kupplungskörper 11 sowie des Gusskörpers 29 erläutert werden, wobei diese Verhältnisse die gleichen sind wie bei der Kupplungsausführung nach der Fig. 1 bzw. 3.

Die Ringscheiben 35, die werkstoffeinheitlich-stoffschlüssiger Bestandteil des Gusskörpers 29 sind, schließen einen Winkel W ein, dessen Winkelhalbierende 51 mit der Längsachse der Schraube 38 zusammenfällt. Die Winkelhalbierende 51 steht lotrecht auf der Längsachse L der Kupplung 10. Die Schenkel S des Winkels W schneiden die Längsachse L der Kupplung 10 an demselben Punkt 46, in dem die Ebenen 52 der Außenflächen 11a der Kupplungskörper 11 die Längsachsen L schneiden. Diese spezielle V-förmige Gestaltung der gummielastischen Elemente 11 führt zu deren gleichmäßiger Schubspannungsverteilung über ihren gesamten Querschnitt hinweg.

Bei den dargestellten Ausführungsbeispielen ist in einem radial inneren Bereich 48 diese Geometrie verlassen. Hier sind die elastischen Kupplungskörper 11, wie aus Fig. 5 ersichtlich, dadurch verbreitert und in ihrer Elastizität erhöht, dass in eben diesem Bereich 48 die Außenfläche der Ringscheiben 35 nicht länger schräg bzw. kegelig, sondern, ebenso wie die Anschlussflansche 12 und 13, plan zur Längsmittelachse L der Kupplung 10 verlaufen.

## Patentansprüche

1. Elastische Wellenkupplung (10) mit wenigstens zwei koaxial angeordneten, einstückigen sowie im wesentlichen V-förmigen elastischen Kupplungskörpem (11), deren jeder mit seiner etwa in Axialrichtung nach außen weisenden Ringfläche (11 a) mit einem Anschlussflansch (12; 13) und mit seiner nach innen weisenden Ringfläche (11b) mit einem metallischen inneren Ringkörper jeweils durch Vulkanisation verbunden ist, wobei die äußeren Anschlussflansche (12; 13) von planen, ringförmigen Blechen gebildet sind und die inneren Ringkörper drehfest zu einem kegelförmigen Körper miteinander verbunden sind, **dadurch gekennzeichnet, dass** die inneren Ringkörper einen einstückigen, im Längsschnitt im wesentlichen V-förmigen Gusskörpers (29) ausbilden und dass im Gusskörper (29) ein von innen nach außen durchgehender Belüftungskanal (40) vorgesehen ist.

2. Kupplung nach Anspruch 1, **dadurch gekennzeichnet, dass** die Quermittelebene (51) des Gusskörpers (29) lotrecht zur Längsachse (L) der Kupplung (10) verläuft und die Ringscheiben (35) zumindest über ihre wesentliche radiale Erstreckung hinweg unter einem Winkel (w) geneigt zu der Längsachse (L) angeordnet sind, derart, dass die Ringscheiben (35) - im Längsschnitt der Kupplung (10) betrachtet - einen sich zur Längsachse (L) der Kupplung (10) hin öffnenden Winkel (W) ausbilden.

3. Kupplung nach Anspruch 2, **dadurch gekennzeichnet, dass** die Schenkel (S) des Winkels (W) die Längsachse (L) -der Kupplung (10) jeweils etwa in den Ebenen (52) der zugehörigen Anschlussflansche (12, 13) schneiden

4. Kupplung nach Anspruch 2 oder 3, **dadurch gekennzeichnet, dass** im Scheitelbereich des Winkels (W) wenigstens eine Luftaustrittsöffnung (40) zwischen den Ringscheiben (35) vorhanden ist:

5. Kupplung nach Anspruch 4, **dadurch gekennzeichnet, dass** die Ringscheiben (35) über Versteifungsrippen (36) miteinander verbunden sind.

6. Kupplung nach Anspruch 1 oder einem der folgenden, **dadurch gekennzeichnet, dass** im Falle einer segmentierten Kupplung ein Stützring (39) vorgesehen ist, mit dem der Gusskörper (29) mittels Schrauben (38) verspannbar ist, die von der Außenseite des Gusskörpers (29) her in radialer Richtung in den Stützring (39) einschraubbar sind.

7. Kupplung nach Anspruch 6, **dadurch gekennzeichnet, dass** der Stützring (39) schmaler ist als der Abstand zwischen den Ringscheiben (35) des Gusskörpers (29) im Anordnungsbereich des Stützrings (39).

8. Kupplung nach Anspruch 7, **dadurch gekennzeichnet, dass** zwischen dem Stützring (39) und den inneren Ringkörpem (35) Lufteintrittsöffnungen (49) vorgesehen sind.

9. Kupplung nach einem der Ansprüche 5 bis 8, **dadurch gekennzeichnet, dass** die Versteifungsrippen (36) in ihren inneren, zur Längsachse (L) der Kupplung (10) weisenden Stirnseiten jeweils eine Nut (50) zur formschlüssigen Aufnahme des Stützrings (39) aufweisen.

10. Kupplung nach einem der Ansprüche 5 bis 9, **dadurch gekennzeichnet, dass** im Falle einer Kupplung mit parallel geschalteten Kupplungskörpern der Stützring (39) Bestandteil einer Nabe (42) ist, die mit einem Antriebsflansch (44) drehfest verbunden ist.

11. Kupplung nach einem der vorherigen Ansprüche, **dadurch gekennzeichnet, dass** die Ringscheiben (35) radial innere Abschnitte (48) aufweisen, die im wesentlichen senkrecht zur Längsachse (L) der Kupplung (10) ausgerichtet sind.

12. Kupplung nach einem der vorhergehenden Ansprüche, **dadurch gekennzeichnet, dass** der Gusskörper (29) aus Aluminium oder einer Alu-Legierung gegossen ist.

13. Kupplung nach einem der vorhergehenden Ansprüche zum Anschluß an die Schwungscheibe (14) eines Antriebsaggregats wie Dieselmotor od. dgl., **dadurch gekennzeichnet, dass** zwischen Schwungscheibe (14) und zugehörigem Anschlussflansch (13) wenigstens ein Distanzkörper (17) angeordnet ist, der mindestens einen Belüftungsspalt (23) zwischen Schwungscheibe (14) und Anschlussflansch (13) ausbildet.

14. Kupplung nach Anspruch 13, **dadurch gekennzeichnet, dass** der Distanzkörper (17) von einem ringscheibenförmigen DistaJntzblech (28) mit Strömungskanälen und/oder Durchtrittsöffnungen für Kühlluft gebildet ist.

15. Kupplung nach Anspruch 14, **dadurch gekennzeichnet, dass** das Distanzblech (28) Luftführungskanäle (23) ausbildende radiale Einschnitte (18) aufweist.

16. Kupplung nach Anspruch 15, **dadurch gekennzeichnet, dass** sich die radialen Einschnitte (18) in Radialrichtung zur Längsachse (L) der Kupplung (10) hin über den inneren Umfang (22) des Anschlussflansches (13) hinaus erstrecken.

17. Kupplung nach Anspruch 13 oder 14, **dadurch gekennzeichnet, dass** am Außenumfang des Anschlussflansches (13) als Luftdurchtrittöffnungen Einschnitte (27) und/oder Bohrungen vorgesehen sind, die in den Bereichen der radialen Einschnitte (18) angeordnet sind.

18. Kupplung nach einem der Ansprüche 13 bis 17, **dadurch gekennzeichnet, dass** das Distanzblech (28) von Befestigungsschrauben (15) durchgriffen ist, mit denen der Anschlussflansch (13) an der Schwungscheibe (14) montierbar ist.

## Claims

1. Elastic shaft coupling (10) having at least two coaxially disposed, one-piece and essentially V-shaped elastic coupling bodies (11), each of which is connected by its annular face (11a) which points outwards, approximately in the axial direction, to a connecting flange (12; 13) and by its annular face (11b) which points inwards, to an inner annular metal body, in each case by vulcanisation, wherein the outer connecting flanges (12; 13) are formed by flat, annular metal plates and the inner annular bodies are connected to one another in a torsion-proof manner to form a conical body, **characterised in that** the inner annular bodies construct a one-piece casting (29) which is essentially V-shaped in longitudinal section, and that a ventilating duct (40) which passes through from the inside to the outside is provided in the said casting (29).

2. Coupling according to claim 1, **characterised in that** the transverse median plane (51) of the casting (29) extends perpendicularly to the longitudinal axis (L) of the coupling (10), and the annular discs (35) are disposed so as to be inclined, at least over their essential radial extent, at an angle (w) in relation to the longitudinal axis (L) in such a way that the said annular discs (35) construct - viewed in the longitudinal section of the coupling (10) - an angle (W) which is open towards the said longitudinal axis (L) of the coupling (10).

3. Coupling according to claim 2, **characterised in that** the sides (S) of the angle (W) in each case intersect the longitudinal axis (L) of the coupling (10) approximately in the planes (52) of the appertaining connecting flanges (12, 13).

4. Coupling according to claim 2 or 3, **characterised in that**, in the apex region of the angle (W), there is at least one air outlet aperture (40) between the annular discs (35).

5. Coupling according to claim 4, **characterised in that** the annular discs (35) are connected to one another via stiffening ribs (36).

6. Coupling according to claim 1 or one of the subsequent claims, **characterised in that**, in the case of a segmented coupling, a supporting ring (39) is provided, with the aid of which the casting (29) can be braced by means of screws (38) which can be screwed into the said supporting ring (39) in the radial direction from the outside of the said casting (29).

7. Coupling according to claim 6, **characterised in that** the supporting ring (39) is narrower than the distance between the annular discs (35) of the casting (29) in the region in which the supporting ring (39) is disposed.

8. Coupling according to claim 7, **characterised in that** air inlet apertures (49) are provided between the supporting ring (39) and the inner annular bodies (35).

9. Coupling according to one of claims 5 to 8, **characterised in that** the stiffening ribs (36) each have, in their inner end faces that point towards the longitudinal axis (L) of the coupling (10), a groove (50) for receiving the supporting ring (39) in a form-locking manner.

10. Coupling according to one of claims 5 to 9, **characterised in that**, in the case of a coupling having coupling bodies which are connected in a parallel manner, the supporting ring (39) is a component of a hub (42) which is connected to a driving flange (44) in a torsion-proof manner.

11. Coupling according to one of the preceding claims, **characterised in that** the annular discs (35) have radially inner sections (48) which are orientated essentially perpendicularly to the longitudinal axis (L) of the coupling (10).

12. Coupling according to one of the preceding claims, **characterised in that** the casting (29) is cast from aluminium or an aluminium alloy.

13. Coupling according to one of the preceding claims for connection to the driven disc (14) of a drive unit such as a diesel engine or the like, **characterised in that** there is disposed, between the driven disc (14) and the appertaining connecting flange (13), at least one distance piece (17) which constructs at least one ventilating gap (23) between the said driven disc (14) and connecting flange (13).

14. Coupling according to claim 13, **characterised in that** the distance piece (17) is formed by an annular-disc-shaped metal distance plate (28) with flow ducts and/or pass-through apertures for cooling air.

15. Coupling according to claim 14, **characterised in that** the metal distance plate (28) has radial incisions (18) which construct air-guiding ducts (23).

16. Coupling according to claim 15, **characterised in that** the radial incisions (18) extend beyond the inner periphery (22) of the connecting flange (13) in the radial direction in relation to the longitudinal axis (L) of the coupling (10) .

17. Coupling according to claim 13 or 14, **characterised in that** incisions (27) and/or bores, which are disposed in the regions of the radial incisions (18), are provided on the outer periphery of the connecting flange (13) as pass-through apertures for air.

18. Coupling according to one of claims 13 to 17, **characterised in that** the metal distance plate (28) has, engaging through it, fastening screws (15) with the aid of which the connecting flange (13) can be mounted on the driven disc (14).

## Revendications

1. Accouplement d'arbre (10) élastique, comportant au moins deux corps d'accouplement (11) élastiques, disposés coaxialement, réalisés d'une seule pièce ainsi que sensiblement en forme de V, dont chacun est relié par vulcanisation, par sa face annulaire (11a) tournée à peu près en direction axiale vers l'extérieur, à une bride de raccordement (12 ; 13) et, par sa face annulaire (11b) tournée vers l'intérieur, à un corps annulaire intérieur métallique, les brides de raccordement (12 ; 13) étant formées par des tôles à forme annulaire plane et les corps annulaires intérieurs étant reliés ensemble de façon assujettie en rotation pour former un corps de forme conique, **caractérisé en ce que** les corps annulaires intérieurs forment un corps moulé (29) monobloc, sensiblement en forme de V si on l'observe en coupe longitudinale, et **en ce qu'**un canal d'aération (40) continu, allant de l'intérieur vers l'extérieur, est prévu dans le corps moulé (29).

2. Accouplement selon la revendication 1, **caractérisé en ce que** le plan médian transversal (51) du corps moulé (29) s'étend perpendiculairement par rapport à l'axe longitudinal (L) de l'accouplement (10) et les disques annulaires (35), au moins sur leur étendue sensiblement radiale, sont inclinés d'un angle (w) par rapport à l'axe longitudinal (L), de manière que les disques annulaires (35) - si on observe l'accouplement (10) en coupe longitudinale - forment un angle (W) s'ouvrant en direction de l'axe longitudinal (L) de l'accouplement (10).

3. Accouplement selon la revendication 2, **caractérisé en ce que** les branches (S) de l'angle (W) coupent l'axe longitudinal (L) de l'accouplement (10), chaque fois à peu près dans les plans (52) des brides de raccordement (12; 13) afférentes.

4. Accouplement selon la revendication 2 ou 3, **caractérisé en ce qu'**au moins une ouverture de sortie d'air (40) est prévue entre les disques annulaires (35), dans la zone de sommet de l'angle (W).

5. Accouplement selon la revendication 4, **caractérisé en ce que** les disques annulaires (35) sont reliés ensemble par des nervures de rigidification (36).

6. Accouplement selon la revendication 1 ou l'une des revendications suivantes, **caractérisé en ce que**, dans le cas d'un accouplement segmenté, une bague d'appui (39) est prévue, à l'aide de laquelle le corps moulé (29) peut être serré à l'aide de vis (38), susceptibles d'être vissées dans la direction radiale dans la bague d'appui (39), en partant de la face extérieure du corps moulé (29).

7. Accouplement selon la revendication 6, **caractérisé en ce que** la bague d'appui (39) est plus étroite que l'espacement qu'il y a entre les disques annulaires (35) du corps moulé (29) dans la zone d'agencement de la bague d'appui (39).

8. Accouplement selon la revendication 7, **caractérisé en ce que** des ouvertures d'entrée d'air (49) sont prévues entre la bague d'appui (39) et les corps annulaires intérieurs (35) .

9. Accouplement selon l'une des revendications 5 à 8, **caractérisé en ce que** les nervures de rigidification (36) présentent, dans leurs faces frontales intérieures, tournées vers l'axe longitudinal (L) de l'accouplement (10), chacune une gorge (50) pour loger la bague d'appui (39) avec une liaison à ajustement de forme.

10. Accouplement selon l'une des revendications 5 à 9, **caractérisé en ce que**, dans le cas d'un accouplement ayant des corps d'accouplement branchés en parallèle, la bague d'appui (39) fait partie d'un moyeu (42) relié de façon assujettie en rotation à une bride d'entraînement (44).

11. Accouplement selon l'une des revendications précédentes, **caractérisé en ce que** les disques annulaires (35) présentent des tronçons (48) intérieurs radiaux, orientés sensiblement perpendiculairement par rapport à l'axe longitudinal (L) de l'accouplement (10).

12. Accouplement selon l'une des revendications précédentes, **caractérisé en ce que** le corps moulé (29) est moulé en aluminium ou bien en un alliage d'aluminium.

13. Accouplement selon l'une des revendications précédentes, pour raccordement au disque de volant d'inertie (14) d'un groupe d'entraînement, tel qu'un moteur diesel ou analogue, **caractérisé en ce qu'**entre le disque de volant d'inertie (14) et la bride de raccordement (13) afférente est disposé au moins un corps d'espa cement (17) formant au moins un intervalle d'aération (23) entre le disque de volant d'inertie (14) et la bride de raccordement (13).

14. Accouplement selon la revendication 13, **caractérisé en ce que** le corps d'espacement (17) est formé par une tôle d'espacement (28) en forme de disque annulaire, comportant des canaux d'écoulement et/ou des ouvertures de passage pour de l'air de refroidissement.

15. Accouplement selon la revendication 14, **caractérisé en ce que** la tôle d'espacement (28) présente des entailles (18) radiales formant des canaux de guidage d'air (23).

16. Accouplement selon la revendication 15, **caractérisé en ce que** les entailles radiales (18) s'étendent dans la direction radiale, par rapport à l'axe longitudinal (L) de l'accouplement (10), en dépassant de la périphérie intérieure (22) de la bride de raccordement (13).

17. Accouplement selon la revendication 13 ou 14, **caractérisé en ce que**, sur la périphérie extérieure de la bride de raccordement (13), sont prévues, en guise d'ouvertures de passage d'air, des entailles (27) et/ou des perçages, disposé(e)s dans les zones des entailles radiales (18) .

18. Accouplement selon l'une des revendications 13 à 17, **caractérisé en ce que** la tôle d'espacement (28) est traversée par des vis de fixation (15), à l'aide desquelles la bride de raccordement (13) est susceptible d'être montée sur le disque de volant d'inertie (14).
